# EUROPÄISCHE PATENTSCHRIFT

(11) **EP 2 408 270 B1**
(45) Veröffentlichungstag und Bekanntmachung des Hinweises auf die Patenterteilung: **26.12.2012**
(21) Anmeldenummer: 11174150.0
(22) Anmeldetag: 15.07.2011
(51) Int. Cl.: H05B 37/02, H05B 35/00

(54) **Sensorgesteuerte Leuchte**
Sensor controlled lamp
Luminaire controllé par capteur

(30) Priorität: 16.07.2010 DE 102010031428
(43) Veröffentlichungstag der Anmeldung: 18.01.2012
(73) Patentinhaber: Zumtobel Lighting GmbH, 6850 Dornbirn (AT)
(72) Erfinder: Rüf, Karl-Heinz, 6850 Dornbirn (AT)
(74) Vertreter: Thun, Clemens

(56) Entgegenhaltungen:
- EP-A2- 0 794 690
- CH-A5- 683 383
- CH-A5- 696 170
- DE-A1- 19 929 642
- DE-A1-102004 018 912

## Beschreibung

Die Erfindung betrifft eine Leuchte mit einer ersten Lichtquelle zur Erzeugung einer Allgemeinbeleuchtung, einer Steuereinheit, die dazu ausgebildet ist, die erste Lichtquelle zur Erzeugung von Licht in unterschiedlichen Intensitäten unter Verwendung eines Helligkeits-Sollwerts anzusteuern, einem Sensor zur Erfassung eines Helligkeits-Istwerts, wobei die Steuereinheit dazu ausgebildet ist, die erste Lichtquelle in Abhängigkeit von dem mit dem Sensor erfassten Helligkeits-Istwert anzusteuern, sowie mit einer zweiten Lichtquelle zur Erzeugung einer gerichteten Beleuchtung, wobei die zweite Lichtquelle in einen ersten und in einen zweiten Schaltzustand versetzt werden kann.

Eine derartige Leuchte ist in Form einer Stehleuchte für Büro-Arbeitsplätze bekannt. Die zweite Lichtquelle dient dabei zur Erzeugung einer auf eine Arbeitsfläche gerichteten Beleuchtung. Der Sensor ist ebenfalls auf die Arbeitsfläche gerichtet. Die zweite Lichtquelle kann durch Ein- und Ausschalten in die zwei Schaltzustände versetzt werden.

Wird bei einer derartigen Leuchte die zweite Lichtquelle eingeschaltet, so bewirkt dies im Allgemeinen eine Zunahme des mit dem Sensor erfassten Helligkeits-Istwerts, was im Weiteren dazu führen kann, dass durch die Steuereinheit die Helligkeit der ersten Lichtquelle reduziert wird. Dies ist jedoch in der Regel nicht erwünscht. Beim Ausschalten der zweiten Lichtquelle gelten analoge Überlegungen.

Der Erfindung liegt die Aufgabe zugrunde, eine entsprechende Leuchte anzugeben, die eine verbesserte Ansteuerung der ersten Lichtquelle ermöglicht. Außerdem soll ein entsprechendes Verfahren zur Ansteuerung einer Leuchte angegeben werden.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Leuchte vorgesehen, die eine erste Lichtquelle zur Erzeugung einer Allgemeinbeleuchtung aufweist, eine Steuereinheit, die dazu ausgebildet ist, die erste Lichtquelle zur Erzeugung von Licht in unterschiedlichen Intensitäten unter Verwendung eines Helligkeits-Sollwerts anzusteuern, einen Sensor zur Erfassung eines Helligkeits-Istwerts, wobei die Steuereinheit dazu ausgebildet ist, die erste Lichtquelle in Abhängigkeit von dem mit dem Sensor erfassten Helligkeits-Istwert anzusteuern, sowie eine zweite Lichtquelle zur Erzeugung einer gerichteten Beleuchtung, wobei die zweite Lichtquelle in einen ersten und in einen zweiten Schaltzustand versetzt werden kann. Die Steuereinheit ist weiterhin dazu ausgebildet, den Helligkeits-Sollwert bei einer Veränderung des Schaltzustands der zweiten Lichtquelle zu verändern.

Durch eine entsprechende Veränderung des Helligkeits-Sollwerts durch die Steuereinheit lässt sich erzielen, dass eine Veränderung des Schaltzustands der zweiten Lichtquelle von der Steuereinheit bei der Ansteuerung der ersten Lichtquelle berücksichtigt wird. Insbesondere lässt sich erzielen, dass die Veränderung des Schaltzustands der zweiten Lichtquelle keine oder lediglich eine reduzierte Helligkeitsveränderung der ersten Lichtquelle hervorruft.

Vorzugsweise ist die Steuereinheit dazu ausgebildet, den Helligkeits-Sollwert zu erhöhen, falls die Veränderung des Schaltzustands der zweiten Lichtquelle eine Zunahme der Intensität des von der zweiten Lichtquelle abgegebenen Lichts zur Folge hat; und analog ist die Steuereinheit vorzugsweise dazu ausgebildet, den Helligkeits-Sollwert zu erniedrigen, falls die Veränderung des Schaltzustands der zweiten Lichtquelle eine Abnahme der Intensität des von der zweiten Lichtquelle abgegebenen Lichts zur Folge hat. Auf diese Weise kann einer ungewollten Helligkeitsänderung der ersten Lichtquelle gezielt entgegen gesteuert werden.

Vorzugsweise ist dabei die Steuereinheit weiterhin dazu ausgebildet, einen Unterschied zwischen einem ersten, mit dem Sensor vor der Veränderung des Schaltzustands erfassten Helligkeits-Istwerts und einem zweiten, mit dem Sensor nach der Veränderung des Schaltzustands erfassten Helligkeits-Istwerts als Maß für die Veränderung des Helligkeits-Sollwerts zu verwenden. Mit anderen Worten kann also vorgesehen sein, dass die Steuereinheit die Änderung des Helligkeits-Istwerts im Moment der Veränderung des Schaltzustands der zweiten Lichtquelle nicht als Änderung des Helligkeits-Istwerts bewertet, sondern als entsprechende Änderung des Helligkeits-Sollwerts.

Vorzugsweise umfasst die erste Lichtquelle eine Leuchtstofflampe und/oder die zweite Lichtquelle einen LED-Strahler.

Weiterhin vorteilhaft weist die Leuchte Schaltmittel zum Verändern des Schaltzustands der zweiten Lichtquelle auf, vorzugsweise in Form von manuell betätigbaren Schaltmitteln.

Vorteilhaft ist dabei die zweite Lichtquelle im ersten Schaltzustand ausgeschaltet und im zweiten Schaltzustand eingeschaltet, wobei die zweite Lichtquelle vorzugsweise lediglich in die beiden genannten Schaltzustände versetzt werden kann.

Bei vorgesehener Ausrichtung der Leuchte relativ zur Vertikalen ist die mit der zweiten Lichtquelle erzeugbare, gerichtete Beleuchtung vorzugsweise in den unteren Halbraum gerichtet und der Sensor derart ausgerichtet, dass er zur Erfassung des Helligkeits-Istwerts Licht aus dem unteren Halbraum erfasst.

Weiterhin vorteilhaft umfasst die Leuchte außerdem einen Leuchtenkopf, in dem sowohl die erste Lichtquelle als auch die zweite Lichtquelle angeordnet sind.

Gemäß einem weiteren Aspekt der Erfindung ist ein Verfahren zur Ansteuerung einer Leuchte vorgesehen, die eine erste Lichtquelle zur Erzeugung einer Allgemeinbeleuchtung aufweist, eine Steuereinheit, durch die die erste Lichtquelle zur Erzeugung von Licht in unterschiedlichen Intensitäten unter Verwendung eines Helligkeits-Sollwerts angesteuert wird, einen Sensor zur Erfassung eines Helligkeits-Istwerts, wobei die Steuereinheit die erste Lichtquelle in Abhängigkeit von dem mit dem Sensor erfassten Helligkeits-Istwert ansteuert, sowie eine zweite Lichtquelle zur Erzeugung einer gerichteten Beleuchtung, wobei die zweite Lichtquelle in einen ersten und in einen zweiten Schaltzustand versetzt werden kann. Das Verfahren umfasst den folgenden Schritt: der Helligkeits-Sollwert wird von der Steuereinheit bei einer Veränderung des Schaltzustands der zweiten Lichtquelle verändert.

Vorzugsweise erhöht die Steuereinheit den Helligkeits-Sollwert, falls die Veränderung des Schaltzustands der zweiten Lichtquelle eine Zunahme der Intensität des von der zweiten Lichtquelle abgegebenen Lichts zur Folge hat und/oder erniedrigt die Steuereinheit den Helligkeits-Sollwert, falls die Veränderung des Schaltzustands der zweiten Lichtquelle eine Abnahme der Intensität des von der zweiten Lichtquelle abgegebenen Lichts zur Folge hat.

Vorzugsweise wird dabei bei einer Veränderung des Schaltzustands der zweiten Lichtquelle ein Unterschied zwischen einem ersten, unmittelbar vor der Veränderung mit dem Sensor erfassten Helligkeits-Istwert und einem zweiten, unmittelbar nach der Veränderung erfassten Helligkeits-Istwert als Maß für die Veränderung des Helligkeits-Sollwerts verwendet.

Weiterhin vorteilhaft wird nach der Veränderung des Schaltzustands der zweiten Lichtquelle durch die Steuereinheit keine Veränderung der Helligkeit der ersten Lichtquelle bewirkt, bevor der Helligkeits-Sollwert von der Steuereinheit verändert worden ist. Auf diese Weise lässt sich erzielen, dass die Veränderung des Schaltzustands an sich keine Veränderung der Helligkeit der ersten Lichtquelle zur Folge hat.

Insbesondere kann es sich bei dem Verfahren um ein Verfahren zur Ansteuerung einer erfindungsgemäßen Leuchte handeln.

Die Erfindung wird im Folgenden anhand eines Ausführungsbeispiels und mit Bezug auf die Zeichnungen näher erläutert. Es zeigen:
- Fig. 1: eine perspektivische Ansicht einer erfindungsgemäßen Leuchte von schräg unten und
- Fig. 2: eine schematische Querschnitt-Skizze der Leuchte.

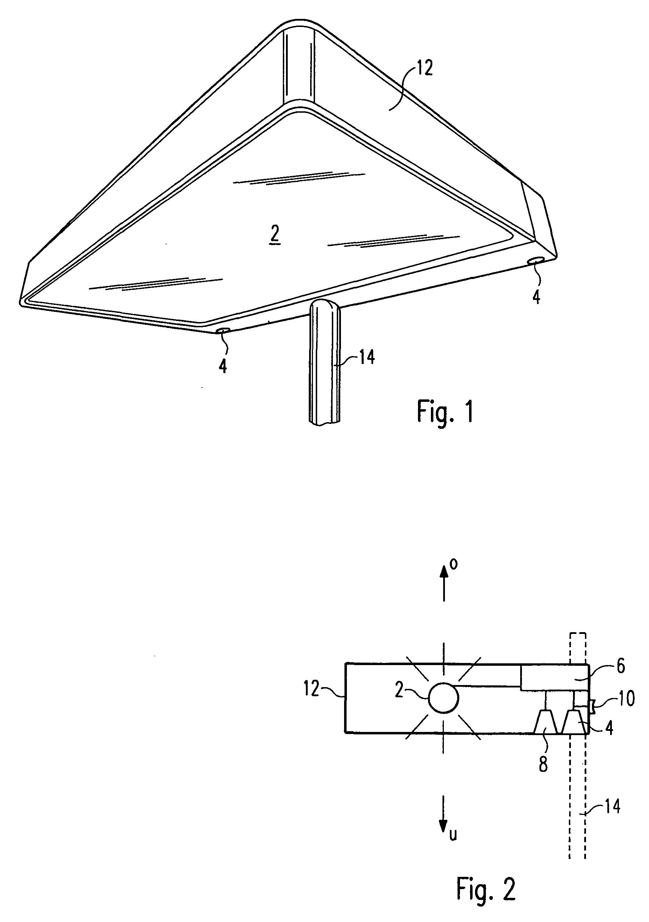

Wie in Fig. 1 beispielhaft gezeigt, kann es sich bei der erfindungsgemäßen Leuchte um eine Stehleuchte mit einem (nur teilweise gezeigten) Standfuß 14 handeln.

Wie schematisch in Fig. 2 gezeigt, weist die Leuchte eine erste Lichtquelle 2 auf, die zur Erzeugung einer Allgemeinbeleuchtung dient. Insbesondere kann die Leuchte derart ausgebildet sein, dass ein von der ersten Lichtquelle 2 erzeugtes Licht die Leuchte in einen weiten Raumwinkelbereich verlässt, so dass sich hierdurch eine diffuse, ungerichtete Raumbeleuchtung erzeugen lässt. Wie in Fig. 2 schematisch angedeutet, kann dabei vorgesehen sein, dass - bei vorgesehener Ausrichtung der Leuchte mit Bezug auf die Vertikale - ein von der ersten Lichtquelle 2 erzeugtes Licht die Leuchte nach oben *o* verlässt, vorzugsweise in einen überwiegenden Teil des oberen Halbraums und/oder nach unten *u*, vorzugsweise in einen überwiegenden Teil des unteren Halbraums. Mit anderen Worten kann die erste Lichtquelle 2 zur Erzeugung einer indirekten und/oder einer direkten Beleuchtung vorgesehen sein.

Es kann vorgesehen sein, dass die erste Lichtquelle 2 eine Leuchtstofflampe umfasst.

Bei der Leuchte kann es sich um eine Leuchte handeln, die im beschriebenen Sinn zur Erzeugung einer Allgemeinbeleuchtung geeignet ist. Beispielsweise kann es sich also um einen Stehleuchte, eine Pendelleuchte oder um eine abgehängte Leuchte handeln.

Weiterhin umfasst die Leuchte eine Steuereinheit 6, die dazu ausgebildet ist, die erste Lichtquelle 2 zur Erzeugung von Licht in unterschiedlichen Intensitäten unter Verwendung eines Helligkeits-Sollwerts anzusteuern. Die erste Lichtquelle 2 kann also dimmbar vorgesehen sein, wobei sie durch die Steuereinheit 6 auf den Helligkeits-Sollwert geregelt wird. Bei der Steuereinheit 6 kann es sich um ein Steuermodul handeln.

Weiterhin umfasst die Leuchte einen Sensor 8 zur Erfassung eines Helligkeits-Istwerts, wobei die Steuereinheit 6 dazu ausgebildet ist, die erste Lichtquelle 2 in Abhängigkeit von dem mit dem Sensor 8 erfassten Helligkeits-Istwert anzusteuern. Es kann also eine Regelung der ersten Lichtquelle 2 durch die Steuereinheit 6 vorgesehen sein, die auf eine Erzielung einer Übereinstimmung zwischen dem mit dem Sensor 8 erfassten Helligkeits-Istwert und dem Helligkeits-Sollwert gerichtet ist. Insbesondere kann eine tageslichtabhängige Ansteuerung der ersten Lichtquelle 2 durch die Steuereinheit 6 vorgesehen sein.

Weiterhin umfasst die Leuchte eine zweite Lichtquelle 4 zur Erzeugung einer gerichteten Beleuchtung, insbesondere zur Beleuchtung einer Arbeitsfläche, beispielsweise einer Arbeitsfläche, die sich bei vorgesehener Ausrichtung der Leuchte zur Vertikalen unterhalb der zweiten Lichtquelle 4 befindet.

Die zweite Lichtquelle 4 kann in einen ersten und in einen zweiten Schaltzustand versetzt werden. Insbesondere kann also vorgesehen sein, dass die Leuchte Schaltmittel 10 zur Veränderung des Schaltzustands der zweiten Lichtquelle 4 aufweist, vorzugsweise manuell betätigbare Schaltmittel. Im ersten Schaltzustand kann die zweite Lichtquelle 4 ausgeschaltet sein und im zweiten Schaltzustand kann die zweite Lichtquelle 4 eingeschaltet sein. Beispielsweise sind dabei für die zweite Lichtquelle 4 lediglich die zwei genannten Schaltzustände vorgesehen.

Es kann vorgesehen sein, dass - bei vorgesehener Ausrichtung der Leuchte mit Bezug auf die Vertikale - der Sensor 8 derart ausgerichtet ist, dass er zur Erfassung des Helligkeits-Istwerts Licht aus dem unteren Halbraum erfasst. Beispielsweise kann der Sensor 8 auf die Arbeitsfläche gerichtet sein. Es kann also vorgesehen sein, dass mit dem Sensor 8 ein von der Arbeitsfläche, also beispielsweise einem Bereich einer Tischoberfläche, reflektiertes Kunst und/oder Tageslicht erfasst wird.

Die Leuchte kann einen Leuchtenkopf 12 aufweisen, in dem die erste Lichtquelle 2 und/oder die zweite Lichtquelle 4 und/oder der Sensor 8 angeordnet ist bzw. sind.

Die zweite Lichtquelle kann eine LED (lichtemittierende Diode) umfassen, insbesondere einen LED-Strahler, beispielsweise kann die zweite Lichtquelle 4 zwei LED-Strahler umfassen oder aus zwei LED-Strahlern gebildet sein.

Die Steuereinheit 6 ist dazu ausgebildet, den Helligkeits-Sollwert bei einer Veränderung des Schaltzustands der zweiten Lichtquelle 4 zu verändern. Vorzugsweise ist dabei vorgesehen, dass die Steuereinheit 6 hierzu entsprechend mit den Schaltmitteln 12 zur Veränderung des Schaltzustands der zweiten Lichtquelle 4 verbunden ist bzw. Letztere Teil der Steuereinheit 6 bilden. Mit anderen Worten kann also vorgesehen sein, dass eine Veränderung des Schaltzustands, also beispielsweise ein Aktivieren bzw. Deaktivierten der zweiten Lichtquelle 4, über die Steuereinheit 6 erfolgt.

Das erfindungsgemäße Verfahren zur Ansteuerung der Leuchte umfasst also folgenden Schritt: der Helligkeits-Sollwert wird von der Steuereinheit 6 bei einer Veränderung des Schaltzustands der zweiten Lichtquelle 4 verändert.

Insbesondere kann vorgesehen sein, dass die Steuereinheit 6 dazu ausgelegt ist, den Helligkeits-Sollwert zu erhöhen, falls die Veränderung des Schaltzustands der zweiten Lichtquelle 4 eine Zunahme der Intensität des von der zweiten Lichtquelle 4 abgegebenen Lichts zur Folg hat und insbesondere kann vorgesehen sein, dass die Steuereinheit 6 dazu ausgelegt ist, den Helligkeits-Sollwert zu erniedrigen, falls durch die Veränderung des Schaltzustands der zweiten Lichtquelle 4 eine Abnahme der Intensität des von der zweiten Lichtquelle 4 abgegebenen Lichts zur Folge hat. Hierdurch kann einer ungewollten Veränderung der Helligkeit der ersten Lichtquelle 2 bei Veränderung des Schaltzustands der zweiten Lichtquelle 4 effektiv entgegen gewirkt werden, bzw. eine solche ungewollte Helligkeitsveränderung der ersten Lichtquelle 2 vermieden werden.

Es kann also vorgesehen sein, dass bei einem Einschalten der zweiten Lichtquelle 4 die Steuereinheit 6 den Helligkeits-Sollwert erhöht und/oder bei einem Ausschalten der zweiten Lichtquelle 4 den Helligkeits-Sollwert erniedrigt.

Vorzugsweise ist dabei die Steuereinheit 6 dazu ausgebildet ist, einen Unterschied zwischen einem ersten, mit dem Sensor 8 vor, insbesondere unmittelbar vor der Veränderung des Schaltzustands erfassten Helligkeits-Istwerts und einem zweiten, mit dem Sensor 8 nach, insbesondere unmittelbar nach der Veränderung des Schaltzustands erfassten Helligkeits-Istwerts als Maß für die Veränderung des Helligkeits-Sollwerts zu verwenden. Bei dem Verfahren wird dementsprechend vorzugsweise bei einer Veränderung des Schaltzustands der zweiten Lichtquelle 4 der genannte Unterschied als Maß für die Veränderung des Helligkeits-Sollwerts verwendet.

Vorzugsweise ist dabei eine dementsprechende zeitverzögerte Ansteuerung bzw. Regelung der ersten Lichtquelle 2 durch die Steuereinheit 6 vorgesehen. Konkreter formuliert kann also vorgesehen sein, dass nach der Veränderung des Schaltzustands der zweiten Lichtquelle 4 die Steuereinheit 6 keine Veränderung der Helligkeit der ersten Lichtquelle 2 bewirkt, bevor der Helligkeits-Sollwert von der Steuereinheit 6 verändert worden ist. Auf diese Weise lässt sich erzielen, dass ein Ein- oder Ausschalten der zweiten Lichtquelle 4 als solches nicht zu einer Veränderung der Helligkeit der ersten Lichtquelle 2 führt.

## Patentansprüche

1. Leuchte, aufweisend
- eine erste Lichtquelle (2) zur Erzeugung einer Allgemeinbeleuchtung,
- eine Steuereinheit (6), die dazu ausgebildet ist, die erste Lichtquelle (2) zur Erzeugung von Licht in unterschiedlichen Intensitäten unter Verwendung eines Helligkeits-Sollwerts anzusteuern,
- einen Sensor (8) zur Erfassung eines Helligkeits-Istwerts, wobei die Steuereinheit (6) dazu ausgebildet ist, die erste Lichtquelle (2) in Abhängigkeit von dem mit dem Sensor (8) erfassten Helligkeits-Istwert anzusteuern,
- mindestens eine zweite Lichtquelle (4) zur Erzeugung einer gerichteten Beleuchtung,
wobei die zweite Lichtquelle (4) in einen ersten und in einen zweiten Schaltzustand versetzt werden kann,
**dadurch gekennzeichnet,**
**dass** die Steuereinheit (6) weiterhin dazu ausgebildet ist, den Helligkeits-Sollwert bei einer Veränderung des Schaltzustands der zweiten Lichtquelle (4) zu verändern.

2. Leuchte nach Anspruch 1,
bei der die Steuereinheit (6) dazu ausgebildet ist, den Helligkeits-Sollwert zu erhöhen, falls die Veränderung des Schaltzustands der zweiten Lichtquelle (4) eine Zunahme der Intensität des von der zweiten Lichtquelle (4) abgegebenen Lichts zur Folge hat und/oder
die Steuereinheit (6) dazu ausgebildet ist, den Helligkeits-Sollwert zu erniedrigen, falls die Veränderung des Schaltzustands der zweiten Lichtquelle (4) eine Abnahme der Intensität des von der zweiten Lichtquelle (4) abgegebenen Lichts zur Folge hat.

3. Leuchte nach Anspruch 1 oder 2,
wobei die Steuereinheit (6) weiterhin dazu ausgebildet ist, einen Unterschied zwischen einem ersten, mit dem Sensor (8) vor der Veränderung des Schaltzustands erfassten Helligkeits-Istwerts und einem zweiten, mit dem Sensor (8) nach der Veränderung des Schaltzustands erfassten Helligkeits-Istwerts als Maß für die Veränderung des Helligkeits-Sollwerts zu verwenden.

4. Leuchte nach einem der vorhergehenden Ansprüche,
bei der die erste Lichtquelle (2) eine Leuchtstofflampe umfasst und/oder die zweite Lichtquelle (4) einen LED-Strahler.

5. Leuchte nach einem der vorhergehenden Ansprüche,
weiterhin aufweisend
- Schaltmittel (10) zum Verändern des Schaltzustands der zweiten Lichtquelle (4), vorzugsweise in Form von manuell betätigbaren Schaltmitteln (10).

6. Leuchte nach einem der vorhergehenden Ansprüche,
bei der die zweite Lichtquelle (4) im ersten Schaltzustand ausgeschaltet ist und im zweiten Schaltzustand eingeschaltet ist.

7. Leuchte nach einem der vorhergehenden Ansprüche,
bei der - bei vorgesehener Ausrichtung der Leuchte relativ zur Vertikalen - die mit der zweiten Lichtquelle (4) erzeugbare, gerichtete Beleuchtung in den unteren Halbraum gerichtet ist und der Sensor (8) derart ausgerichtet ist, dass er zur Erfassung des Helligkeits-Istwerts Licht aus dem unteren Halbraum erfasst.

8. Leuchte nach einem der vorhergehenden Ansprüche,
weiterhin aufweisend
- einen Leuchtenkopf (12), in dem sowohl die erste Lichtquelle (2) als auch die zweite Lichtquelle (4) angeordnet sind.

9. Verfahren zur Ansteuerung einer Leuchte, aufweisend
- eine erste Lichtquelle (2) zur Erzeugung einer Allgemeinbeleuchtung,
- eine Steuereinheit (6), durch die die erste Lichtquelle (2) zur Erzeugung von Licht in unterschiedlichen Intensitäten unter Verwendung eines Helligkeits-Sollwerts angesteuert wird,
- einen Sensor (8) zur Erfassung eines Helligkeits-Istwerts, wobei die Steuereinheit (6) die erste Lichtquelle (2) in Abhängigkeit von dem mit dem Sensor (8) erfassten Helligkeits-Istwert ansteuert,
- eine zweite Lichtquelle (4) zur Erzeugung einer gerichteten Beleuchtung, wobei die zweite Lichtquelle (4) in einen ersten und in einen zweiten Schaltzustand versetzt werden kann,
**gekennzeichnet durch**
folgenden Schritt: der Helligkeits-Sollwert wird von der Steuereinheit (6) bei einer Veränderung des Schaltzustands der zweiten Lichtquelle (4) verändert.

10. Verfahren nach Anspruch 9,
bei der die Steuereinheit (6) den Helligkeits-Sollwert erhöht, falls die Veränderung des Schaltzustands der zweiten Lichtquelle (4) eine Zunahme der Intensität des von der zweiten Lichtquelle (4) abgegebenen Lichts zur Folge hat und/oder
die Steuereinheit (6) den Helligkeits-Sollwert erniedrigt, falls die Veränderung des Schaltzustands der zweiten Lichtquelle (4) eine Abnahme der Intensität des von der zweiten Lichtquelle (4) abgegebenen Lichts zur Folge hat.

11. Verfahren nach Anspruch 9 oder 10,
wobei bei einer Veränderung des Schaltzustands der zweiten Lichtquelle (4) ein Unterschied zwischen einem ersten, unmittelbar vor der Veränderung mit dem Sensor (8) erfassten Helligkeits-Istwert und einem zweiten, unmittelbar nach der Veränderung erfassten Helligkeits-Istwert als Maß für die Veränderung des Helligkeits-Sollwerts verwendet wird.

12. Verfahren nach einem der Ansprüche 9 bis 11,
wobei nach der Veränderung des Schaltzustands der zweiten Lichtquelle (4) die Steuereinheit (6) keine Veränderung der Helligkeit der ersten Lichtquelle (2) bewirkt, bevor der Helligkeits-Sollwert von der Steuereinheit (6) verändert worden ist.

13. Verfahren nach einem der Ansprüche 9 bis 12,
wobei es sich bei der Leuchte um eine Leuchte nach einem der Ansprüche 1 bis 8 handelt.

## Claims

1. A luminaire having
- a first light source (2) for the generation of general lighting,
- a control unit (6) which is formed to activate the first light source (2) for the generation of light in different intensities with use of a desired brightness value,
- a sensor (8) for the detection of an actual brightness value, wherein the control unit (6) is formed to activate the first light source (2) as a function of the actual brightness value detected with the sensor (8),
- at least one second light source (4) for the generation of directed lighting,
wherein the second light source (4) can be transferred into a first and into a second switching state,
**characterised in that**
the control unit (6) is formed, furthermore, to change the desired brightness value in the case of a change in the switching state of the second light source (4).

2. A luminaire according to claim 1,
in which the control unit (6) is formed to raise the desired brightness value if the change in the switching state of the second light source (4) results in an increase in the intensity of the light emitted by the second light source (4), and/or
the control unit (6) is formed to lower the desired brightness value if the change in the switching state of the second light source (4) results in a decrease in the intensity of the light emitted by the second light source (4).

3. A luminaire according to claim 1 or 2,
wherein the control unit (6) is formed, furthermore, to use a difference between a first actual brightness value that is detected by the sensor (8) before the change in the switching state and a second actual brightness value that is detected by the sensor (8) after the change in the switching state as a measure for the change in the desired brightness value.

4. A luminaire according to one of the preceding claims, in which the first light source (2) comprises a fluorescent lamp and/or the second light source (4) comprises an LED radiator.

5. A luminaire according to one of the preceding claims, having, furthermore,
- switching means (10) to change the switching state of the second light source (4), preferably in the form of manually actuatable switching means (10).

6. A luminaire according to one of the preceding claims, in which the second light source (4) is switched off in the first switching state and is switched on in the second switching state.

7. A luminaire according to one of the preceding claims, in which - given the provided alignment of the luminaire relative to the vertical - the directed lighting that can be generated with the second light source (4) is directed into the lower half-space, and the sensor (8) is aligned in such a way that in order to detect the actual brightness value it detects light from the lower half-space.

8. A luminaire according to one of the preceding claims, having, furthermore,
- a luminaire head (12) in which both the first light source (2) and the second light source (4) are arranged.

9. Method for activating a luminaire, having
- a first light source (2) for the generation of general lighting,
- a control unit (6) by means of which the first light source (2) is activated for the generation of light in different intensities with use of a desired brightness value,
- a sensor (8) for the detection of an actual brightness value, wherein the control unit (6) activates the first light source (2) as a function of the actual brightness value detected by the sensor (8),
- a second light source (4) for the generation of directed lighting,
wherein the second light source (4) can be transferred into a first and into a second switching state,
**characterised by**
the following step: the desired brightness value is changed by the control unit (6) in the case of a change in the switching state of the second light source (4).

10. Method according to claim 9,
in which the control unit (6) raises the desired brightness value if the change in the switching state of the second light source (4) results in an increase in the intensity of the light emitted by the second light source (4), and/or
the control unit (6) lowers the desired brightness value if the change in the switching state of the second light source (4) results in a decrease in the intensity of the light emitted by the second light source (4).

11. Method according to claim 9 or 10,
wherein when there is a change in the switching state of the second light source (4) a difference between a first actual brightness value detected by the sensor (8) immediately before the change and a second actual brightness value detected immediately after the change is used as a measure for the change in the desired brightness value.

12. Method according to one of claims 9 to 11,
wherein after the change in the switching state of the second light source (4) the control unit (6) does not effect any change in the brightness of the first light source (2) before the desired brightness value has been changed by the control unit (6).

13. Method according to one of claims 9 to 12,
wherein the luminaire is a luminaire according to one of claims 1 to 8.

## Revendications

1. Luminaire présentant
- une première source de lumière (2) servant à produire un éclairage général,
- une unité de commande (6) réalisée pour commander la première source de lumière (2) servant à produire diverses intensités de lumière en utilisant une valeur de consigne de luminosité,
- un capteur (8) servant à détecter une valeur réelle de luminosité, sachant que l'unité de commande (6) est réalisée pour commander la première source de lumière (2) en fonction de la valeur réelle de luminosité détectée à l'aide du capteur (8),
- au moins une deuxième source de lumière (4) servant à produire un éclairage orienté,
sachant que la deuxième source de lumière (4) peut être amenée dans un premier état de commutation et dans un deuxième état de commutation,
**caractérisé en ce**
**que** l'unité de commande (6) est réalisée en outre pour modifier la valeur de consigne de luminosité dans le cas d'une modification de l'état de commutation de la deuxième source de lumière (4).

2. Luminaire selon la revendication 1,
dans le cadre duquel l'unité de commande (6) est réalisée pour augmenter la valeur de consigne de luminosité, si la modification de l'état de commutation de la deuxième source de lumière (4) a pour conséquence une augmentation de l'intensité de la lumière émise par la deuxième source de lumière (4) et/ou
dans le cadre duquel l'unité de commande (6) est réalisée pour abaisser la valeur de consigne de luminosité si la modification de l'état de commutation de la deuxième source de lumière (4) a pour conséquence une baisse de l'intensité de la lumière émise par la deuxième source de lumière (4).

3. Luminaire selon la revendication 1 ou 2,
sachant que l'unité de commande (6) est réalisée en outre pour utiliser une différence entre une première valeur réelle de luminosité détectée à l'aide du capteur (8) avant la modification de l'état de commutation et une deuxième valeur réelle de luminosité détectée à l'aide du détecteur (8) après la modification de l'état de commutation en tant que mesure pour la modification de la valeur de consigne de la luminosité.

4. Luminaire selon l'une quelconque des revendications précédentes, dans le cadre duquel la première source de lumière (2) comporte une lampe fluorescente et/ou la deuxième source de lumière (4) comporte un projecteur à LED.

5. Luminaire selon l'une quelconque des revendications précédentes, présentant en outre
- des moyens de commutation (10) servant à modifier l'état de commutation de la deuxième source de lumière (4), de préférence sous la forme de moyens de commutation (10) pouvant être actionnés manuellement.

6. Luminaire selon l'une quelconque des revendications précédentes, dans le cadre duquel la deuxième source de lumière (4) est éteinte dans le premier état de commutation et est allumée dans le deuxième état de commutation.

7. Luminaire selon l'une quelconque des revendications précédentes, dans le cadre duquel - dans le cas de l'orientation prévue du luminaire par rapport à la verticale - l'éclairage orienté pouvant être produit par la deuxième source de lumière (4) est orienté dans le demi-espace inférieur, et dans le cadre duquel le capteur (8) est orienté de telle manière qu'il détecte de la lumière en provenance du demi-espace inférieur afin de détecter la valeur réelle de luminosité.

8. Luminaire selon l'une quelconque des revendications précédentes, présentant en outre
- une tête de luminaire (12), dans laquelle sont disposées aussi bien la première source de lumière (2) que la deuxième source de lumière (4).

9. Procédé servant à commander un luminaire, présentant
- une première source de lumière (2) servant à produire un éclairage général,
- une unité de commande (6), laquelle permet de commander la première source de lumière (2) afin de produire diverses intensités de lumière en utilisant une valeur de consigne de luminosité,
- un capteur (8) servant à détecter une valeur réelle de luminosité, sachant que l'unité de commande (6) commande la première source de lumière (2) en fonction de la valeur réelle de luminosité détectée à l'aide du capteur (8),
- une deuxième source de lumière (4) servant à produire un éclairage orienté, sachant que la deuxième source de lumière (4) peut être amenée dans un premier état de commutation et dans un deuxième état de commutation,
**caractérisé par**
l'étape qui suit : la valeur de consigne de luminosité est modifiée par l'unité de commande (6) lors d'une modification de l'état de commutation de la deuxième source de lumière (4).

10. Procédé selon la revendication 9,
dans le cadre duquel l'unité de commande (6) augmente la valeur de consigne de luminosité, si la modification de l'état de commutation de la deuxième source de lumière (4) a pour conséquence une augmentation de l'intensité de la lumière émise par la deuxième source de lumière (4)
et/ou
dans le cadre duquel l'unité de commande (6) abaisse la valeur de consigne de luminosité, si la modification de l'état de commutation de la deuxième source de lumière (4) a pour conséquence la baisse de l'intensité de la lumière émise par la deuxième source de lumière (4).

11. Procédé selon la revendication 9 ou 10,
sachant que dans le cas d'une modification de l'état de commutation de la deuxième source de lumière (4), on utilise une différence entre une première valeur réelle de luminosité détectée à l'aide du capteur (8) directement avant la modification et une deuxième valeur réelle de luminosité détectée directement après la modification en tant que mesure pour la modification de la valeur de consigne de luminosité.

12. Procédé selon l'une quelconque des revendications 9 à 11,
sachant qu'après la modification de l'état de commutation de la deuxième source de lumière (4), l'unité de commande (6) n'entraîne aucune modification de la luminosité de la première source de lumière (2) avant que la valeur de consigne de luminosité n'ait été modifiée par l'unité de commande (6).

13. Procédé selon l'une quelconque des revendications 9 à 12,
sachant que le luminaire est un luminaire selon l'une quelconque des revendications 1 à 8.
